# EUROPÄISCHE PATENTSCHRIFT

(11) **EP 3 740 106 B1**
(45) Veröffentlichungstag und Bekanntmachung des Hinweises auf die Patenterteilung: **19.10.2022**
(21) Anmeldenummer: 18807936.2
(22) Anmeldetag: 21.11.2018
(51) Int. Cl.: A47J 31/44, A47J 31/46

(54) **VORRICHTUNG ZUM AUFSCHÄUMEN VON MILCH**
DEVICE FOR FOAMING MILK
DISPOSITIF POUR FAIRE MOUSSER DU LAIT

(30) Priorität: 18.01.2018 DE 102018101025
(43) Veröffentlichungstag der Anmeldung: 25.11.2020
(73) Patentinhaber: FRANKE Kaffeemaschinen AG, 4663 Aarburg (CH)
(72) Erfinder: WENIGER, Stefan Remo, 5037 Muhen (CH)
(74) Vertreter: LBP Lemcke, Brommer & Partner Patentanwälte mbB
(86) Internationale Anmeldenummer: PCT/EP2018/081998
(87) Internationale Veröffentlichungsnummer: WO 2019/141409

(56) Entgegenhaltungen:
- EP-A2- 0 472 272
- EP-A2- 2 025 270
- EP-B1- 0 472 272
- EP-B1- 1 949 829

## Beschreibung

Die vorliegende Erfindung betrifft eine Vorrichtung zum Aufschäumen von Milch umfassend eine rohrförmige Dampflanze mit einem nach unten weisenden, offenen Ende zum Einführen in ein Milchgefäß, einen Dampferzeuger, der über eine Dampfleitung mit der Dampflanze in Verbindung steht, eine in der Dampfleitung angeordnete Venturidüse, in die eine Luftzuleitung einmündet, und eine stromaufwärts der Venturidüse in der Dampfleitung angeordnete Ventilanordnung zum Öffnen und Schließen der Dampfleitung.

Kaffeemaschinen werden häufig mit einer Vorrichtung zur Milchschaumerzeugung ausgestattet, um Kaffeegetränke wie Cappuccino oder Latte Macchiato zubereiten zu können. Neben Kaffeevollautomaten, die ein internes Milchsystem zur Ausgabe fertig aufgeschäumten Milchschaums aufweisen, werden häufig auch sogenannte Dampflanzen vorgesehen, über die Dampf ausgegeben werden kann, mit dem extern Milch in einem Milchgefäß aufgeschäumt werden kann. Hierbei ist bekannt, dass der Dampfströmung Luft beigemischt wird, die zum Aufschäumen der Milch benötigt wird. Aus der EP 1 949 829 B1 ist beispielsweise eine Vorrichtung mit einer Dampflanze bekannt, bei der über eine Venturidüse in die Dampfleitung Luft mit angesaugt wird.

Eine Dampflanze, bei der Luft über eine Venturidüse angesaugt wird und die Luftmenge über eine manuell oder elektromechanisch verstellbare Drossel geregelt werden kann, ist aus der EP 2 025 270 A2 bekannt.

Daneben ist auch bekannt, dass zusätzlich zum Dampf Druckluft verwendet wird, um Milch aufzuschäumen. Beispielsweise wird in der EP 1 776 905 A1 ein System beschrieben, bei dem in die Dampfzuleitung einer Dampflanze über einen Kompressor Druckluftstöße von jeweils einer Sekunde Dauer zugeführt werden. In der EP 2 534 986 B1 ist ein System beschrieben, bei dem Druckluft in den zur Dampferzeugung vorgesehenen Boiler eingeleitet wird.

Vor allem die Verwendung von Druckluft birgt die Gefahr, dass beim Aufschäumen Milch aus dem Milchgefäß herausspritzt, insbesondere, wenn nur kleine Milchmengen aufgeschäumt werden sollen; aber auch beim Ansaugen von Luft über eine Venturidüse besteht das Problem, dass sich das Verhältnis von Luft und Dampf schlecht dosieren lässt und die aufgeschäumte Milch dadurch nicht die gewünschte Konsistenz und Temperatur erhält.

Es ist daher eine Aufgabe der Erfindung, eine Vorrichtung zum Aufschäumen von Milch mittels einer Dampflanze anzugeben, die hinsichtlich ihrer Aufschäumeigenschaften verbessert ist.

Die Aufgabe wird gelöst durch die Merkmale des Anspruchs 1. Vorteilhafte Ausgestaltungen sind den abhängigen Ansprüchen zu entnehmen.

Erfindungsgemäß ist bei einer Vorrichtung der eingangs genannten Art vorgesehen, dass die Luftleitung mit einem elektrisch ansteuerbaren Luftventil versehen ist, welches in Abhängigkeit eines Steuersignals einen über die Venturidüse angesaugten Luftstrom auf einen über das Luftventil einstellbaren Volumenstrom begrenzt.

Erfindungsgemäß ist das Luftventil als getaktetes Luftventil ausgeführt, welches in Abhängigkeit eines periodischen Schaltsignals öffnet und schließt, um einen gepulsten Luftstrom mit einem mittleren Volumenstrom zu erzeugen. Die Vorrichtung weist hierbei eine elektrische Steuerschaltung zur Erzeugung des periodischen Schaltsignals auf, wobei zur Dosierung der Luftzufuhr bzw. zur Einstellung des mittleren Volumenstroms eine Frequenz und/oder ein Tastverhältnis des periodischen Schaltsignals einstellbar sind.

Durch die Verwendung eines elektrisch steuerbaren, insbesondere getakteten Luftventils lässt sich die dem Dampfstrom zugeführte Luftmenge auf einfache Weise während der Dauer eines Aufschäumvorgangs einstellen und verändern. Dabei haben Untersuchungen der Anmelderin ergeben, dass durch den mit hoher Frequenz gepulsten Luftstrom erstaunlicherweise bessere Aufschäumergebnisse erzielt werden, als mittels Druckluft oder einem kontinuierlich angesaugten Luftstrom.

Alternativ kann das Luftventil jedoch auch als motorisch angetriebenes Stetigventil, insbesondere Nadelventil ausgeführt werden.

Bei einer vorteilhaften Weiterbildung ist vorgesehen, dass die Ventilanordnung zum Öffnen und Schließen der Dampfleitung mindestens zwei Öffnungsstufen aufweist, über die ein Dampfstrom mit zumindest einer ersten niedrigeren und einer zweiten höheren Durchflussrate freigegeben werden kann. Auf diese Weise kann für eine kleinere Produktmenge und beim Beginn eines Aufschäumvorganges ein Dampfstrom mit geringerer Durchflussrate verwendet werden, damit die Milch nicht aus dem Aufschäumgefäß herausspritzt. Wird dagegen eine größere Menge Milch aufgeschäumt und insbesondere nachdem der entstehende Milchschaum bereits ein gewisses Volumen erreicht hat, kann die Dampfmenge erhöht werden.

Eine solche Ventilanordnung kann vorzugsweise mit zwei oder mehr steuerbaren Magnetventilen aufgebaut werden, die zueinander parallelgeschaltet sind. Hierbei kann die erste Öffnungsstufe durch Öffnen nur eines der Magnetventile und die zweite Öffnungsstufe durch Öffnen von mindestens zwei der Magnetventile realisiert werden. Solche Magnetventile sind als integrierte Ventilblöcke kostengünstig verfügbar, einfach in der Handhabung und zuverlässig im Betrieb.

Die Verwendung eines elektrisch ansteuerbaren, getakteten Luftventils sowie einer Ventilanordnung mit mehreren Öffnungsstufen für den Dampfstrom ermöglicht es, die Luftzufuhr in Abhängigkeit des Dampfstroms bzw. dessen Durchflussrate zu steuern. So ist es vorteilhaft, bei einer Öffnungsstufe für einen niedrigeren Dampfdurchsatz einen Luftstrom mit niedrigerem mittleren Volumenstrom einzustellen und bei einem höheren Dampfdurchsatz die Luftzufuhr durch entsprechende Ansteuerung des Luftventils, insbesondere durch längere Öffnungsphasen, zu erhöhen.

Die Möglichkeit, die Durchflussrate des Dampfes stufenweise zu variieren, erlaubt es auch, zum Aufschäumen von Milch zunächst in einer ersten Öffnungsstufe mit einer Dampfströmung niedrigerer Durchflussrate zu beginnen und anschließend, nach einer vorgegebenen oder vorgebbaren Zeitspanne, die Ventilanordnung in der zweiten Öffnungsstufe zu öffnen, um eine Dampfströmung höherer Durchflussrate freizugeben. Hierdurch wird ein Verspritzen der zunächst noch flüssigen Milch verhindert und, nachdem diese an Volumen zugenommen hat, mit erhöhter Dampfmenge weiter aufgeschäumt.

Die Verwendung des elektronisch steuerbaren, getakteten Luftventils ermöglicht es außerdem, zum Aufschäumen und Erwärmen von Milch zunächst während einer Aufschäumphase die Ventilanordnung in der Dampfleitung zu öffnen und das getaktete Luftventil anzusteuern, um über die Luftleitung Luft in die Dampfströmung anzusaugen, und in einer anschließenden Nacherwärmungsphase das Luftventil zu schließen, die Ventilanordnung in der Dampfleitung aber weiter geöffnet zu halten. Hierdurch wird die anfangs kalte Milch zunächst mit dem luftangereicherten Dampf aufgeschäumt und anschließend mit lediglich Dampf weiter erwärmt. Auf diese Weise wird verhindert, dass zu viel Luft in den Milchschaum eingebracht wird, wodurch dieser zu grobporig würde bzw. zusammenfallen könnte. In der Nacherwärmungsphase sorgt der Dampf ohne Luftzusatz dafür, das zuvor eingebrachte Luftvolumen im Milchschaum weiter zu verteilen und zu verfeinern, sodass ein cremiger, feinporiger Milchschaum der gewünschten Temperatur entsteht.

Bei einer besonders vorteilhaften Weiterbildung der vorliegenden Erfindung ist an der Dampflanze ein Temperatursensor angeordnet, der die Temperatur umgebender Flüssigkeit misst. Dies ermöglicht eine automatische Steuerung der Dampfeinleitung bis zu einer gewünschten Endtemperatur. Besonders vorteilhaft ist hierbei, wenn über die Temperatur nicht nur die Ventilanordnung in der Dampfzuleitung, sondern auch das Luftventil gesteuert wird. Insbesondere kann bei Erreichen einer bestimmten, vorgegebenen bzw. vorgebbaren Temperatur die Luftzufuhr gedrosselt oder geschlossen werden. Dies trägt der Erkenntnis Rechnung, dass bei Erreichen einer bestimmten Temperaturdifferenz von der ursprünglichen Ausgangstemperatur bis zur aktuellen Temperatur bei bekannter Wärmekapazität der Milch und bekannter Temperatur und Menge des Dampfes sowie bei bekanntem Taktungsverhältnis des Luftventils eine bestimmbare Luftmenge in die aufzuschäumende Milch eingebracht wurde. Somit kann anhand der aktuellen Temperatur ermittelt werden, ob für eine bestimmte aufzuschäumende Milchmenge die passende Luftmenge bereits eingeleitet wurde, und die Luftzufuhr nach Erreichen der geeigneten Luftmenge gedrosselt werden.

Entsprechend kann bei Verwendung eines Temperatursensors an der Dampflanze die Aufschäumphase bis zum Erreichen einer ersten, vorgebbaren Temperatur durchgeführt werden und die anschließende Nacherwärmungsphase unter Reduzierung bzw. Abschaltung der Luftzufuhr bis zum Erreichen einer zweiten vorgebbaren Temperatur stattfinden.

Die Venturidüse hat einen Aufbau an sich bekannter Art mit einer in der Dampfleitung vorgesehenen Engstelle, die zu einer Erhöhung der Dampfgeschwindigkeit im Bereich der Engstelle führt, und einer in oder kurz hinter der Engstelle einmündenden Luftleitung. In der Venturidüse wird auf Grund der Dampfströmung Luft über die Luftleitung von umgebendem Atmosphärendruck angesaugt. Auf eine Druckluftquelle kann somit verzichtet werden. In der Luftleitung kann zusätzlich ein Luftfilter angeordnet sein, dieser ist jedoch nicht zwingend erforderlich.

Das getaktete Luftventil arbeitet mit einer hohen Frequenz zwischen 5 und 50 Hz, vorzugsweise zwischen 10 und 40 Hz. Untersuchungen der Anmelderin haben ergeben, dass bei diesen vergleichsweise schnellen Schaltzyklen die besten Ergebnisse beim Aufschäumen von Milch erzeugt werden. Es ist möglich, jedoch nicht unbedingt erforderlich, die Schaltfrequenz zu variieren. Die Regelung der Luftmenge geschieht im Rahmen der vorliegenden Erfindung vorzugsweise über eine Anpassung des Tastverhältnisses, also der Länge der Öffnungszeit pro Schaltzyklus.

Im Rahmen der vorliegenden Erfindung kommt als Dampferzeuger vorzugsweise ein Boiler mit einer elektrischen Heizung zum Einsatz. In diesem lässt sich eine ausreichend große Menge Dampf vorhalten, die zum Aufschäumen üblicher Milchmengen benötigt wird. Möglich ist jedoch auch, als Dampferzeuger einen Durchlauferhitzer zu verwenden.

Weitere Vorteile und Eigenschaften der vorliegenden Erfindung ergeben sich aus der nachfolgenden Beschreibung eines Ausführungsbeispiels anhand der Figuren. Dabei zeigt
- Figur 1: ein schematisches Diagramm einer erfindungsgemäßen Aufschäumvorrichtung und
- Figur 2: den Aufbau einer Venturidüse.

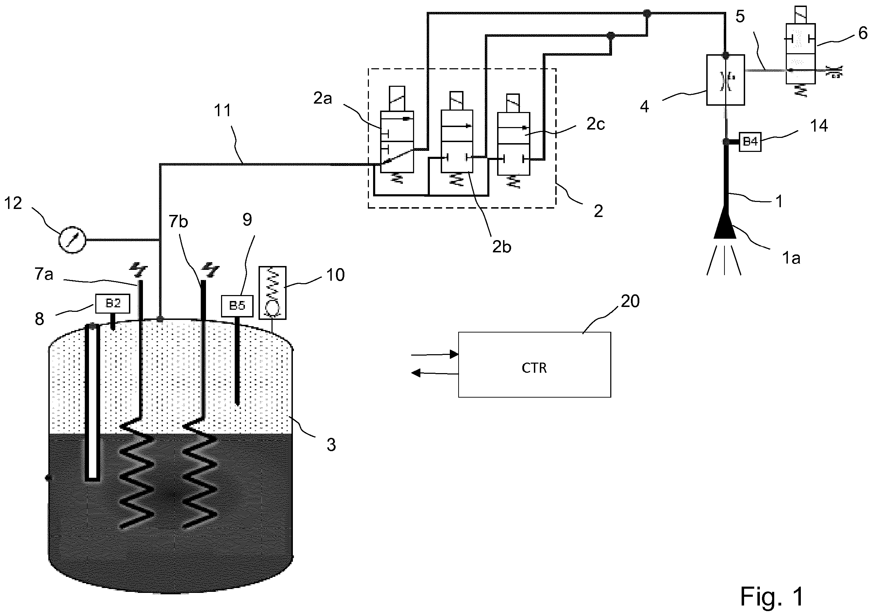

Die in Figur 1 gezeigte Aufschäumvorrichtung besitzt eine Dampflanze 1, die über eine Ventilanordnung 2 mit einem als Dampferzeuger dienenden Heißwasserboiler 3 verbunden ist. Zwischen Ventilanordnung 2 und Dampflanze 1 befindet sich außerdem eine Venturidüse 4, die auch als Venturiinjektor bezeichnet wird, in die eine Luftleitung 5 einmündet, welche mit einem schnell schaltenden Magnetventil 6, dem Luftventil, versehen ist.

Die Ventilanordnung 2 umfasst drei parallel geschaltete Magnetventile 2a, 2b, 2c, wobei entweder Ventil 2a alleine geöffnet wird, um ein geringeres Dampfvolumen auszugeben, oder alle drei Ventile geöffnet werden, um ein größeres Dampfvolumen auszugeben. Dementsprechend ist das Magnetventil 2a separat ansteuerbar, die Ventile 2b, 2c sind elektrisch miteinander verbunden und werden nur gemeinsam angesteuert.

Der Boiler 3 besitzt zwei separate Heizungen 7a, 7b, die im Ausführungsbeispiel jeweils eine Heizleistung von 2,8 kW aufweisen und separat ansteuerbar und regelbar sind. Hierdurch lässt sich einerseits schnell eine ausreichende Menge Dampf produzieren. Andererseits lässt sich die Temperatur und der Dampfdruck im Inneren des Boilers 3 im Stand-by-Betrieb gut kontrollieren. Der Boiler 3 verfügt zu diesem Zweck über einen Temperatursensor 8, der im Ausführungsbeispiel als NTC-Widerstand ausgeführt ist, sowie eine Niveausonde 9, mit der sichergestellt wird, dass ausreichend Wasser im Boiler 3 eingefüllt ist. Ein Überdruckventil 10 öffnet, wenn im Inneren des Boilers 3 ein maximal zulässiger Druck überschritten wird. An die vom Boiler 3 zur Ventilanordnung 2 führenden Dampfleitungen 11 ist außerdem ein Drucksensor 12 (Manometer) angeschlossen, mit dem der Druck in der Dampfleitung 11 gemessen wird.

An der Dampflanze 1 befindet sich ein Temperatursensor 14, der im Ausführungsbeispiel ebenfalls als NTC-Widerstand ausgeführt ist. Das nach unten offene Ende der Dampflanze 1 ist mit einer Dampfdüse 1a versehen, die in ein Milchgefäß eingetaucht wird, um darin enthaltene Milch aufzuschäumen. Der Temperatursensor 14 misst die Temperatur am Ende der Dampflanze 1 und somit die Temperatur der aufzuschäumenden Milch. Der Temperatursensor 14 ermöglicht daher, den Aufschäumvorgang in Abhängigkeit der Milchtemperatur bis zu einer gewünschten Endtemperatur auszugeführen.

Zur Regelung der Luftzufuhr über die Luftzuleitung 5 zu der Venturidüse 4 wird das Luftventil 6 mit einem intermittierenden Signal, insbesondere einem Rechtecksignal, angesteuert und öffnet und schließt in schneller Folge mit einer Taktrate von beispielsweise 10 bis 20 Hz. Bei Verwendung eines geeigneten Hochfrequenz-Schaltventils kann bevorzugt auch mit einer noch höheren Taktfrequenz von etwa 40 Hz geschaltet werden. Hierbei kann zur Steuerung der Luftmenge, die der Dampfströmung über die Venturidüse 4 zugesetzt wird, das Tastverhältnis, also das Verhältnis zwischen Öffnungsdauer und Periode eines Öffnungszyklus, eingestellt werden. Außerdem kann die Luftzufuhr auch vollständig geschlossen werden, wenn lediglich Dampf zur Erwärmung von Milch oder zur Nacherwärmung von Milchschaum ausgegeben werden soll.

Die Ansteuerung des Ventils 6 erfolgt über eine Steuerschaltung 20. An diese ist auch der Temperatursensor 14 angeschlossen, mit dem die Milchtemperatur gemessen werden kann. Außerdem steuert die Steuerschaltung 20 auch das Öffnen und Schließen der Magnetventile 2a, 2b und 2c des Ventilblocks 2. Ebenso kann über die Steuerschaltung 20 der Betrieb des Boilers 3 gesteuert werden. Zu diesem Zweck steuert die Steuerschaltung 20 die Heizungen 7a, 7b an und liest die Signale des Temperatursensors 8 und des Füllstandsensors 9 sowie des Manometers 12 aus.

Damit die Milch zu Beginn eines Aufschäumvorgangs nicht herausspritzen kann ist es vorteilhaft, wenn die Steuerschaltung 20 zunächst nur das Ventil 2a des Ventilblocks 2 öffnet, sodass ein geringerer Dampfstrom zur Dampflanze 1 ausgegeben wird. Zugleich kann das Ventil 6 mit einem geringeren Tastverhältnis angesteuert werden, sodass dem Dampf weniger Luft zugefügt wird. Sobald die Milch anfängt aufzuschäumen und etwas an Volumen gewonnen hat, kann über die Ventile 2b, 2c zusätzlich Dampf zugesetzt werden, also Dampf mit einem höheren Volumenstrom ausgegeben werden. Über das Ventil 6 kann entsprechend die Luftzufuhr erhöht werden, indem das Tastverhältnis verlängert wird.

Nach Erreichen einer bestimmten Temperatur in dem Milchgefäß, im Ausführungsbeispiel bei 65°C, wird die Luftzufuhr über das Ventil 6 geschlossen. Nun wird nur noch Dampf ausgegeben, um den Milchschaum weiter zu erwärmen und zu verfeinern. Dies geschieht im Ausführungsbeispiel bis zu einer Temperatur von 75°C. Anschließend werden alle Dampfventile 2a, 2b, 2c geschlossen und der Aufschäumvorgang ist beendet. Die Steuerung 20 erkennt hierbei selbstständig anhand der Temperatur und auf Grund von Erfahrungswerten, zu welchem Zeitpunkt das Luftventil 6 geschlossen werden soll.

Die Steuerung 20 erkennt am Temperaturanstieg auch, ob lediglich eine kleine Menge Milch oder eine größere Milchmenge aufgeschäumt werden soll. Ist nämlich in einem unter der Dampflanze 1 platzierten Gefäß wenig Milch enthalten, so erfolgt bereits bei Öffnen lediglich des Ventils 2a für eine geringe Dampfzufuhr ein rascherer Temperaturanstieg, als bei einer größeren Milchmenge. Somit kann die Steuerung 20 entscheiden, die Ventile 2b, 2c für den Dampfzusatz geschlossen zu lassen, wenn lediglich eine kleine Milchmenge aufgeschäumt werden soll, und entsprechend ein rascher Temperaturanstieg erkannt wurde. Diese Maßnahme hilft dabei, ein Verspritzen der Milch zu verhindern.

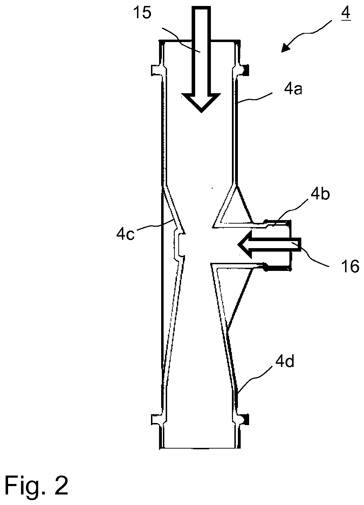

In Figur 2 ist das Prinzip der Venturidüse 4 nochmals im Detail dargestellt. Die Dampfzuleitung ist am oberen Ende 4a der Venturidüse 4 angeschlossen. Diese verjüngt sich zu einer Engstelle 4b, in die ein Anschluss 4c einmündet, an den die Luftzuleitung 5 angeschlossen ist. Die am oberen Ende 4a eintretende Dampfströmung 15 wird auf Grund der Engstelle 4b beschleunigt und erzeugt aufgrund des Venturi-Effekts am seitlich einmündenden Zugang 4c einen Unterdruck, durch den bei geöffnetem Luftventil 6 eine Luftströmung 16 angesaugt und zusammen mit der Dampfströmung 15 am unteren Ende 4d der Venturidüse 4 ausgegeben wird. Das Funktionsprinzip entspricht dem einer Wasserstrahlpumpe.

Die erläuterte Vorrichtung zum Aufschäumen von Milch wird vorzugsweise bei Kaffeemaschinen im Gastronomiebereich, insbesondere bei Siebträgermaschinen oder sonstigen Thekengeräten verbaut. Der Boiler 3 kann hierbei gleichzeitig zur Ausgabe von heißem Wasser für Tee oder zum Brühen von frischen Kaffeegetränken verwendet werden. Genauso ist es möglich, das Dampfsystem mit dem Boiler 3 von der Brühvorrichtung einer Kaffeemaschine getrennt zu halten und für letztere einen separaten Heißwassererzeuger vorzusehen. Des Weiteren kann die Vorrichtung zum Aufschäumen von Milch selbstverständlich auch als separates Beistellgerät ausgebildet sein.

## Patentansprüche

1. Vorrichtung zum Aufschäumen von Milch, umfassend eine rohrförmige Dampflanze (1) mit einem nach unten weisenden, offenen Ende (1a) zum Einführen in ein Milchgefäß, einen Dampferzeuger (3), der über eine Dampfleitung (11) mit der Dampflanze (1) in Verbindung steht, eine in der Dampfleitung (11) angeordnete Venturidüse (4), in die eine Luftzuleitung (5) einmündet, und eine stromaufwärts der Venturidüse (4) in der Dampfleitung (11) angeordnete Ventilanordnung (2) zum Öffnen und Schließen der Dampfleitung (11),
wobei die Luftzuleitung (5) mit einem elektrisch ansteuerbaren Luftventil (6) versehen ist, welches in Abhängigkeit eines Steuersignals einen über die Venturidüse (4) angesaugten Luftstrom auf einen über das Luftventil (6) einstellbaren Volumenstrom begrenzt,
**dadurch gekennzeichnet, dass**
das Luftventil (6) als getaktetes Luftventil (6) ausgeführt ist, welches in Abhängigkeit eines periodischen Schaltsignals öffnet und schließt, um einen gepulsten Luftstrom mit einem mittleren Volumenstrom zu erzeugen, und mit einer elektrischen Steuerschaltung (20) zur Erzeugung des periodischen Schaltsignals, wobei zur Einstellung des mittleren Volumenstroms eine Frequenz und/oder ein Tastverhältnis des periodischen Schaltsignals einstellbar sind.

2. Vorrichtung nach Anspruch 1, bei der die Ventilanordnung (2) mindestens zwei Öffnungsstufen aufweist, über die wahlweise ein Dampfstrom mit zumindest einer ersten niedrigeren oder einer zweiten höheren Durchflussrate freigegeben werden können.

3. Vorrichtung nach Anspruch 2, bei der die Ventilanordnung (2) zwei oder mehr elektrisch steuerbare Magnetventile (2a, 2b, 2c) aufweist, die zueinander parallelgeschaltet sind, und bei dem die erste Öffnungsstufe durch Öffnen nur eines der Magnetventile (2a) und die zweite Öffnungsstufe durch Öffnen von mindestens zwei der Magnetventile (2a, 2b, 2c) realisiert sind.

4. Vorrichtung nach Anspruch 2 oder 3, bei der die Steuerschaltung (20) ausgebildet ist, das getaktete Luftventil (6) so anzusteuern, dass während die Ventilanordnung (2) in der ersten Öffnungsstufe geöffnet ist, ein Luftstrom mit einem niedrigeren mittleren Volumenstrom angesaugt wird, und während die Ventilanordnung (2) in der zweiten Öffnungsstufe geöffnet ist, ein Luftstrom mit einem höheren mittleren Volumenstrom angesaugt wird.

5. Vorrichtung nach einem der Ansprüche 2 bis 4, bei der die Steuerschaltung (20) ausgebildet ist, die Ventilanordnung (2) zum Aufschäumen von Milch zunächst in der ersten Öffnungsstufe zu öffnen, um eine Dampfströmung mit niedrigerer Durchflussrate freizugeben und anschließend nach einer vorgegebenen oder vorgebbaren Zeitspanne die Ventilanordnung (2) in der zweiten Öffnungsstufe zu öffnen, um eine Dampfströmung mit höherer Durchflussrate freizugeben.

6. Vorrichtung nach einem der Ansprüche 2 bis 5, bei der die Steuerschaltung (20) ausgebildet ist, zum Aufschäumen und Erwärmen von Milch während einer Aufschäumphase die Ventilanordnung (2) in der Dampfleitung (11) zu öffnen und das getaktete Luftventil (6) anzusteuern, um über die Luftleitung (5) Luft in die Dampfströmung anzusaugen und in einer anschließenden Nacherwärmungsphase das Luftventil (6) zu schließen, die Ventilanordnung (2) in der Dampfleitung (11) aber weiter geöffnet zu halten.

7. Vorrichtung nach einem der vorangehenden Ansprüche, bei der an der Dampflanze (1) ein Temperatursensor (14) angeordnet ist, der die Temperatur umgebender Flüssigkeit misst, und die Steuerung (20) ausgebildet ist, das Luftventil (6) in Abhängigkeit der gemessenen Temperatur anzusteuern.

8. Vorrichtung nach Anspruch 6 und 7, bei der die Steuerung (20) ausgebildet ist, die Aufschäumphase bis zum Erreichen einer ersten, vorgebbaren Temperatur durchzuführen und die anschließende Nacherwärmungsphase bis zum Erreichen einer zweiten vorgebbaren Temperatur durchzuführen.

9. Vorrichtung nach einem der vorangehenden Ansprüche, bei der in der Venturidüse (4) auf Grund der Dampfströmung (15) Luft über die Luftleitung (5) von umgebendem Atmosphärendruck angesaugt wird.

10. Vorrichtung nach einem der vorangehenden Ansprüche, bei der die elektrische Steuerschaltung (20) ausgebildet ist, das Schaltsignal mit einer Frequenz von zwischen 5 und 50 Hz, vorzugsweise zwischen 10 und 40 Hz zu erzeugen.

11. Vorrichtung nach einem der vorangehenden Ansprüche, bei der der Dampferzeuger als Boiler (3) mit einer elektrischen Heizung (7a, 7b) ausgebildet ist.

## Claims

1. Device for frothing milk, comprising a tubular steam lance (1) with a downward-facing open end (1a) for insertion into a milk vessel, a steam generator (3) connected to the steam lance (1) via a steam line (11), a Venturi nozzle (4) which is arranged in the steam line (11) and into which an air supply line (5) opens, and a valve assembly (2), which is arranged upstream of the Venturi nozzle (4) in the steam line (11), for opening and closing the steam line (11),
wherein the air supply line (5) is provided with an electrically actuatable air valve (6) which, on the basis of a control signal, limits an air flow suctioned in via the Venturi nozzle (4) to a volumetric flow that can be adjusted via the air valve (6),
**characterised in that**
the air valve (6) is designed as a clocked air valve (6) which opens and closes on the basis of a periodic switching signal in order to generate a pulsed air flow with an average volumetric flow, and having an electric control circuit (20) for generating the periodic switching signal, wherein a frequency and/or a duty factor of the periodic switching signal can be adjusted in order to adjust the average volumetric flow.

2. Device according to claim 1, in which the valve assembly (2) has at least two opening stages via which a steam flow can be selectively released at at least a first lower or a second higher flow rate.

3. Device according to claim 2, in which the valve assembly (2) has two or more electrically controllable solenoid valves (2a, 2b, 2c) which are connected in parallel with one another, and in which the first opening stage is implemented by opening only one of the solenoid valves (2a) and the second opening stage is implemented by opening at least two of the solenoid valves (2a, 2b, 2c).

4. Device according to claim 2 or 3, in which the control circuit (20) is designed to control the clocked air valve (6) in such a way that while the valve assembly (2) is open in the first opening stage, an air flow with a lower average volumetric flow is suctioned in, and while the valve assembly (2) is open in the second opening stage, an air flow with a higher average volumetric flow is suctioned in.

5. Device according to any of claims 2 to 4, in which the control circuit (20) is designed to open the valve assembly (2) in order to froth milk first in the first opening stage so as to release a steam flow with a lower flow rate and then, after a predetermined or predeterminable period of time, to open the valve assembly (2) in the second opening stage so as to release a steam flow with a higher flow rate.

6. Device according to any of claims 2 to 5, in which the control circuit (20) is designed to open the valve assembly (2) in the steam line (11) in order to froth and heat milk during a frothing phase and to activate the clocked air valve (6) in order to suction air into the steam flow via the air line (5) and to close the air valve (6) in a subsequent reheating phase, but to keep the valve assembly (2) in the steam line (11) open.

7. Device according to any of the preceding claims, in which a temperature sensor (14) is arranged on the steam lance (1) and measures the temperature of the surrounding liquid, and the controller (20) is designed to control the air valve (6) on the basis of the measured temperature.

8. Device according to claim 6 and 7, in which the controller (20) is designed to carry out the frothing phase until a first, predeterminable temperature is reached and to carry out the subsequent reheating phase until a second predeterminable temperature is reached.

9. Device according to any of the preceding claims, in which in the Venturi nozzle (4), air is suctioned in by ambient atmospheric pressure via the air line (5) due to the steam flow (15).

10. Device according to any of the preceding claims, in which the electrical control circuit (20) is designed to generate the switching signal at a frequency of between 5 and 50 Hz, preferably between 10 and 40 Hz.

11. Device according to any of the preceding claims, in which the steam generator is designed as a boiler (3) with an electric heater (7a, 7b).

## Revendications

1. Dispositif pour faire mousser du lait, comprenant une lance de vapeur tubulaire (1) dotée d'une extrémité ouverte (la) pointée vers le bas, pour une introduction dans un contenant à lait, un générateur de vapeur (3) qui est en communication avec la lance de vapeur (1) par le biais d'une conduite de vapeur (11), une buse venturi (4) agencée dans la conduite de vapeur (11), dans lequel débouche une conduite d'amenée d'air (5), et un agencement de soupape (2) agencé dans la conduite de vapeur (11) en amont de la buse venturi (4) pour ouvrir et fermer la conduite de vapeur (11),
dans lequel la conduite d'amenée d'air (5) est pourvue d'une soupape d'air (6) à commande électrique qui, en fonction d'un signal de commande, limite un flux d'air aspiré par la buse venturi (4) à un débit volumétrique réglable par la soupape d'air (6),
**caractérisé en ce que**
la soupape d'air (6) est réalisée sous la forme d'une soupape d'air cadencée (6) qui s'ouvre et se ferme en fonction d'un signal de commutation périodique pour produire un flux d'air pulsé avec un débit moyen, et avec un circuit de commande électrique (20) pour produire le signal de commutation périodique, dans lequel une fréquence et/ou un rapport cyclique du signal de commutation périodique peuvent être réglés pour un réglage du débit moyen.

2. Dispositif selon la revendication 1, dans lequel l'agencement de soupape (2) présente au moins deux niveaux d'ouverture, via lesquels un flux de vapeur avec au moins un premier débit inférieur ou un second débit d'écoulement supérieur peut être libéré de manière sélective.

3. Dispositif selon la revendication 2, dans lequel l'agencement de soupape (2) comprend deux ou plusieurs soupapes magnétiques pouvant être commandées électriquement (2a, 2b, 2c) qui sont connectées en parallèle entre elles, et dans lequel le premier niveau d'ouverture est réalisé en ouvrant une seule des soupapes magnétiques (2a) et le second niveau d'ouverture est réalisé en ouvrant au moins deux des soupapes magnétiques (2a, 2b, 2c).

4. Dispositif selon la revendication 2 ou 3, dans lequel le circuit de commande (20) est agencé pour commander la soupape d'air cadencée (6) de manière à aspirer un flux d'air présentant un débit volumétrique moyen inférieur pendant que l'agencement de soupape (2) est ouvert dans le premier niveau d'ouverture, et pendant que l'agencement de soupape (2) est ouvert dans le second niveau d'ouverture, un flux d'air avec un débit volumétrique moyen plus élevé est aspiré.

5. Dispositif selon l'une quelconque des revendications 2 à 4, dans lequel le circuit de commande (20) est agencé pour ouvrir l'agencement de soupape (2) afin de faire mousser du lait d'abord dans le premier niveau d'ouverture, pour libérer un écoulement de vapeur à débit d'écoulement inférieur, puis, après un laps de temps prédéterminé ou prédéfini, pour ouvrir l'agencement de soupape (2) dans le second niveau d'ouverture afin de libérer un écoulement de vapeur à un débit d'écoulement plus élevé.

6. Dispositif selon l'une quelconque des revendications 2 à 5, dans lequel le circuit de commande (20) est conçu pour faire mousser et chauffer du lait pendant une phase de moussage, pour ouvrir l'agencement de soupape (2) dans la conduite de vapeur (11) et pour commander la soupape d'air cadencée (6) pour aspirer de l'air dans l'écoulement de vapeur via la conduite d'air (5) et fermer la soupape d'air (6) dans une phase de réchauffage ultérieure, mais pour maintenir l'agencement de soupape (2) ouvert dans la conduite de vapeur (11).

7. Dispositif selon l'une quelconque des revendications précédentes, dans lequel un capteur de température (14) est agencé au niveau de la lance de vapeur (1), qui mesure la température du liquide environnant, et le dispositif de commande (20) est conçu pour commander la soupape d'air (6) en fonction de la température mesurée.

8. Dispositif selon les revendications 6 et 7, dans lequel le dispositif de commande (20) est conçu pour effectuer la phase de moussage jusqu'à ce qu'une première température pouvant être prédéterminée soit atteinte et pour effectuer la phase de réchauffage ultérieure jusqu'à ce qu'une seconde température pouvant être prédéterminée soit atteinte.

9. Dispositif selon l'une quelconque des revendications précédentes, dans lequel de l'air est aspiré à partir de la pression atmosphérique ambiante via la conduite d'air (5) dans la buse venturi (4) en raison de l'écoulement de vapeur (15).

10. Dispositif selon l'une quelconque des revendications précédentes, dans lequel le circuit de commande électrique (20) est adapté pour produire le signal de commutation à une fréquence comprise entre 5 et 50 Hz, de préférence entre 10 et 40 Hz.

11. Dispositif selon l'une quelconque des revendications précédentes, dans lequel le générateur de vapeur est réalisé sous la forme d'une chaudière (3) avec un chauffage électrique (7a, 7b).
